# EUROPEAN PATENT APPLICATION

(11) **EP 3 363 663 A1**
(43) Date of publication of application: **22.08.2018**
(21) Application number: 16425068.0
(22) Date of filing: 15.02.2017
(51) Int. Cl.: B60G 7/00

(54) **METHOD FOR REALIZING PIECES WITH COMPLEX GEROMETRY BY MEANS OF PLASTIC DEFORMATION**

(71) Applicant: C.M.S. S.p.A., 84084 Fisiano (SA) (IT)
(72) Inventor: Ricciardelli, Vincenzo, 84084 Fisciano (SA) (IT); DE Pompa, Luigi, 84084 Fisciano (SA) (IT)
(74) Representative: Conversano, Gabriele

(57) **Abstract**

Method for realizing, starting from flat sheets, pieces with closed section, said section being variably shaped and dimensioned along the development of the piece, comprising the steps of: subjecting a flat sheet to a drawing step, thus obtaining a drawn sheet with curvilinear axis, variable width along the development of the axis and rectilinear edges oriented in direction parallel to the approaching direction of the dies used for drawing; trimming said edges to obtain a drawn and trimmed sheet with, in each section, edges of the length needed for closing the same section; closing the sheet edges to obtain a piece with closed section by means of two dies approaching according to the same approaching direction used for drawing.

## Description

### Technical field

Object of the present patent application is a method for realizing pieces starting from metal sheets, and in particular for realizing pieces developing around a curvilinear axis and having closed section (box), such section being shaped and dimensioned variably along the development of the piece.

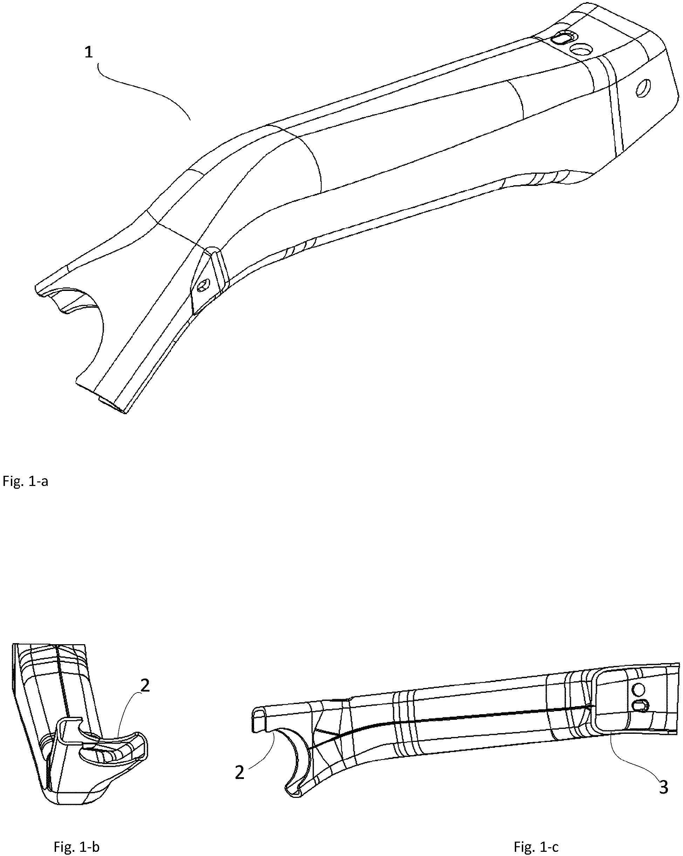

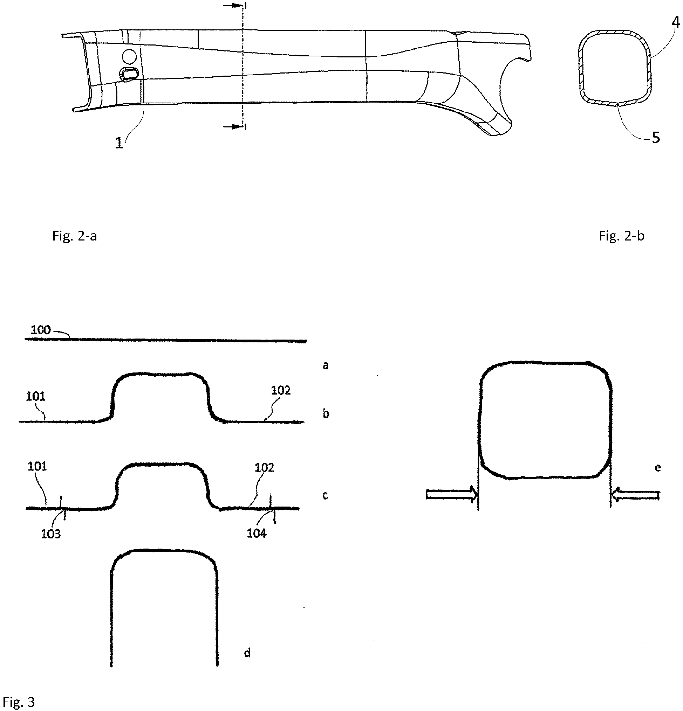

An example of pieces with this kind of geometry is shown in figures 1 and 2. In figures 1a, 1b and 1c there are shown three axonometric views of a piece realizable by means of the method according to the present invention. The piece shown is an arm for the realization of a suspension for vehicle usage, but other types of elements can be realized by means of the method described in the following, without departing from the aims of the invention.

As shown in figures 1-a and 1-b, the finished piece (1) develops around a curvilinear central axis. The section of the piece is variably shaped and dimensioned, as it can be seen comparing the two end sections (2, 3) shown in figure 1-c, and a general intermediate section (4), shown in figure 2-b.

Moreover, in figure 2-b it can be observed that the piece (1) was obtained by means of plastic deformation starting from a flat sheet. It can be seen in fact the joint point (5) of the two ends of the sheet, which are in position to be welded.

### State of the art

Pieces of the type shown in figures 1 and 2 are realized according to the state of the art by means of the method schematically shown in the appended figure 3. In figure 3-a it is shown a flat sheet (100) which is subjected to a drawing step, thus obtaining the result shown in section in figure 3-b. The outer edges (101, 102) of the drawn sheet are then trimmed to obtain the desired dimension (103, 104) and then a flanging step follows, whose result is shown in section in figure 3-d, by means of which by means of a punch moving in the direction indicated by the arrow the edges are bent, and finally, by inserting an inner core (not shown in figure) and by moving the die according to the direction of the arrows in figure 3-e, the piece gets its finished shape. This method, with little unsubstantial variations, is commonly used to realize pieces with closed and variable section along the axis.

It is to be précised, for clarity, that what shown in figure 3 is a schematic representation of a generic section of the piece, e that the whole piece is not shown for simplicity. It is clear in fact that, since they are pieces developing around a curvilinear axis, the section views shown in figure 3 would not be rigorous from a geometric point of view, if referred to the piece being worked as a whole.

### Technical problem

Anyway, the just described method and the others known at the state of the art have some drawbacks. Firstly, the piece is trimmed, as shown in figure 3-c, before being subjected to a flanging step, and in the following to a closing one. For pieces having regular shape this method does not have particular problems, anyway when working with pieces with complex geometry, and in particular with pieces with variable section developed around a curved axis, the flanging step shown in figure 3-d leads to the formation of not controlled and off tolerance wrinkles or deformations, and this affects also the next closing step, shown in figure 3-e, with the result that at the section closing point the sheet edges are at a variable distance to each other, which is not controllable in deterministic way, and they are also not aligned. This is a quite significant problem since, after the just described deformation plastic step, the pieces of this kind are to be welded and the rules for safety welds require that the edges to be welded are aligned to each other and at a distance within a predetermined tolerance.

Another problem of the embodiments known at the state of the art is that the local thinning of the sheet is to be controlled. In pieces with safety functions it is required that, in a finished piece, the thinning of the sheet is all over lower than 20%. Because of the double plastic deformation which the piece is subjected to after the trimming step, this requirement cannot be guaranteed with the embodiments known at the state of the art. Another problem is the presence of cracks and breaking points on the sheet edges in curved areas.

### Aim of the invention

Therefore, aim of the present invention is to provide a method for realizing pieces with closed section (box) and complex geometry starting from metal sheets, which overcomes the known drawbacks of the known embodiments.

In particular, the method according to the present invention provides a method which, starting from flat sheets, allows to realize pieces with closed section, with variable shape and dimension and which develop around a curvilinear axis.

According to another aim, the present invention provides a method which allows to realize such pieces while guaranteeing that the edges of the sheet, once re-closed, are aligned and at such a distance that the tolerances set out in project step are respected.

Another aim is to provide a method for realizing, starting from flat sheets, pieces with closed section, said section being variably shaped and dimensioned around a curvilinear axis, wherein after the trimming step the closing step follows immediately, without interposing the intermediate flanging step which makes the process unstable.

Yet, the present invention provides a method for realizing pieces with closed section and complex geometry, which does not comprise edge closing step of the sheet with the dies moving laterally, but which can be realized in all its steps with the dies approaching along the same direction.

Finally, aim of the present invention is to provide a method able to guarantee the respect of the project specifications concerning sheet thinning and material integrity, thus guaranteeing absence of puckering and cracks.

### Brief description of the invention

The present invention reaches the prefixed aims since it provides a method for realizing, starting from flat sheets, pieces with closed section, said section being variably shaped and dimensioned along the development of the piece, comprising the steps of: subjecting a flat sheet to a drawing step thus obtaining a drawn sheet with curvilinear axis, variable width along the development of the axis and rectilinear edges oriented in direction parallel to the approaching direction of the dies used for drawing; trimming said edges to obtain a drawn and trimmed sheet with, in each section, edges of the length needed for closing the same section; closing the sheet edges to obtain a piece with closed section by means of two dies approaching according to the same approaching direction used for drawing.

### Figures

The method according to the invention will be described in the following with reference to the appended figures 1 to XX.

In figure 1 (a, b, c) there are shown three views of a piece realizable with the method according to the present invention; in figure 2 there are shown a side (2-a) and section view (2-b) of the same piece, respectively; in figure 3 (1-b-c-d) there are schematically shown the typical working steps of the methods known at the state of the art for realization of similar pieces.

In figure 4(a-f) there are shown a series of views of the sheet in the various working steps with the method according to the present invention. The section views next to each tridimensional view are to be intended as example of the shape of a generic section of the piece.

In figure 5(a-e) there are shown example section views of the functioning of the tools for carrying out the method.

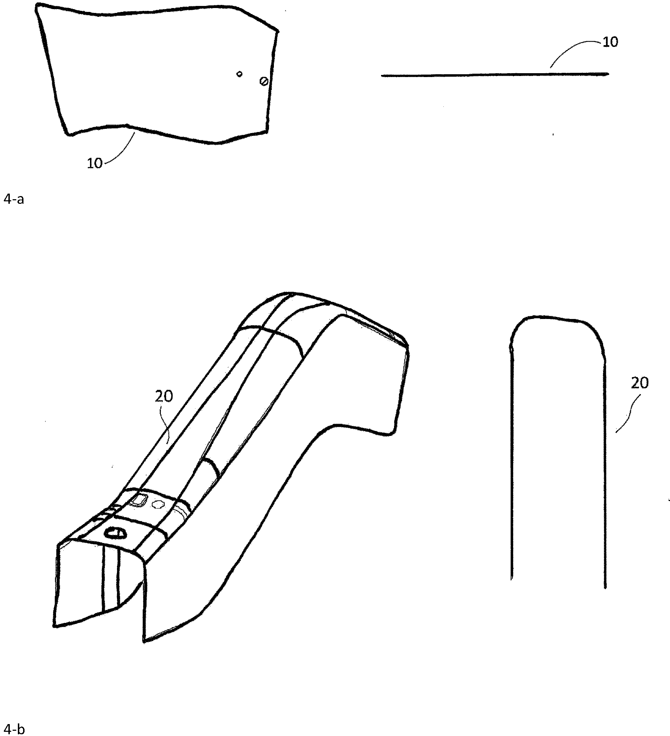

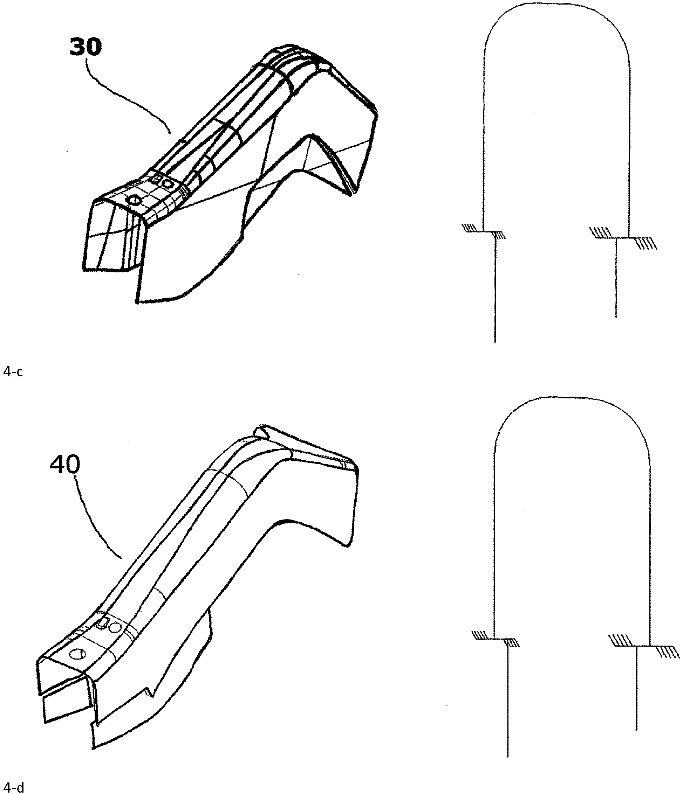

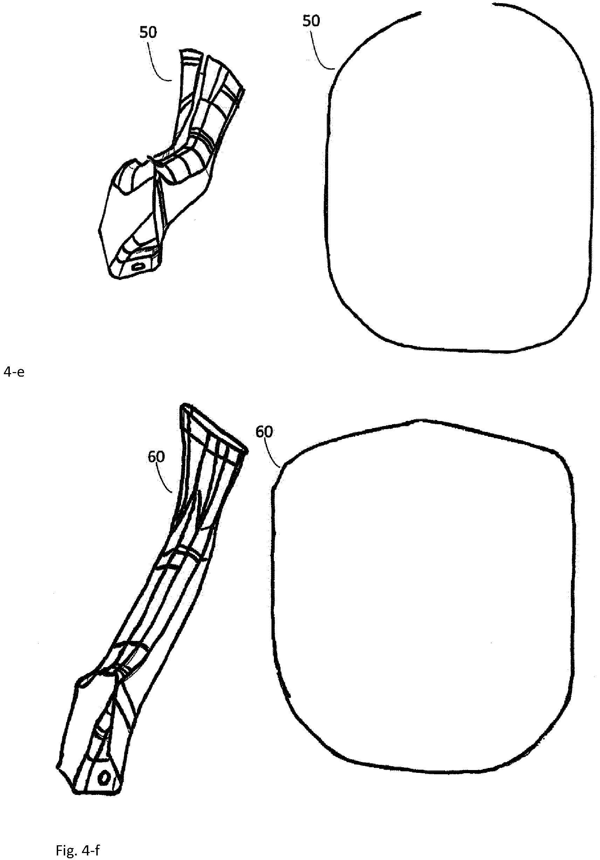

With reference to figure 4-a, it is possible to observe how the method starts from a flat sheet (10), which is cut according to a starting profile depending on the geometry of the finished piece. It is to be considered that this step, even if useful to allow material saving and to improve forming in drawing step, is to be considered possible: because of the shape of the piece to be realized it could be used in fact a flat sheet with rectangular shape.

The flat sheet (10) shown in figure 4-a is then subjected to a drawing step, thus obtaining the drawn sheet (20) shown in figure 4-b. It is possible to observe that the drawing step produces a piece already with curvilinear axis and variable width along the development of the axis. Moreover, as shown in the same figure, the drawn sheet (20) has vertical, and if observed in section, rectilinear edges. It is to be précised that with "vertical" it is intended the direction parallel to the approaching direction of the dies, shown from the arrows in the section view of figure 4-b. Moreover, it is to be observed that it is not provided, as instead occurs in the methods known at the state of the art and as shown in figure 3-b, to leave not drawn a portion of sheet, orthogonal to the approaching direction of the dies.

Once the sheet is drawn, there it follows the trimming of the edges, as shown in figures 4-c and 4-d, to obtain a drawn and trimmed sheet (40), and to have in each section of the piece vertical edges which have exactly the length needed for closing the same section. The measure to provide trimming of the piece on just completely bent edges allows to eliminate wrinkles formed in drawing step and to proceed to the next step of edge closing without the need of flanging step, which is instead used in the embodiments known at the state of the art. The flanging step causes in turn the formation of wrinkles and imperfections and makes useless the sheet cleaning carried out with the trimming step. At this point, it is possible to proceed to the edge closing step, shown in the appended figures 4-e and 4-f. One of the differences of the method according to the present invention with respect to the methods known at the state of the art is that piece edges closing occurs by closing with the dies approaching according to the drawing direction, and not according to a direction orthogonal thereto.

It is to be specified also that, in the appended figures 4-e and 4-f, there are shown two distinct closing steps which produce firstly a sheet with closer edges (50) and in the following a sheet with side by side edges (60). According to the geometry of the piece to be realized it is however not excluded that it is sufficient only one sheet closing step which allows, by means of forming with dies approaching along the drawing axis, to obtain a finished piece starting from the drawn and cut sheet.

This method is provided with at least the following advantages:
- it causes less thinning of sheet ends, in particular where there are provided sharp bends and complex profiles. This is because the sheet edge is positioned between the two dies and, so it is pressed during the bending step;
- it allows not to use, for bending steps, cammed tools (which would be needed for providing bending in orthogonal direction), thus allowing to work with simpler tools to be realized and to have more reliability and repetitiveness;
- it allows to realize elements with complex geometry, for which cams would not allow flanging. As said, in fact, the piece to be realized can have any bending: in a top view of the piece (in the approaching direction of the die), in case of using cammed tools there would be interference at positive bending radii, while at negative bending radii the tools would move away, thus not allowing to control the piece deformation. Instead, by working with a die approaching from above it is possible to guide correctly the piece deformation, regardless of the bending of the same;
- finally, the described method allows that tolerances posed by the welding rules concerning the edges distance and alignment are respected.

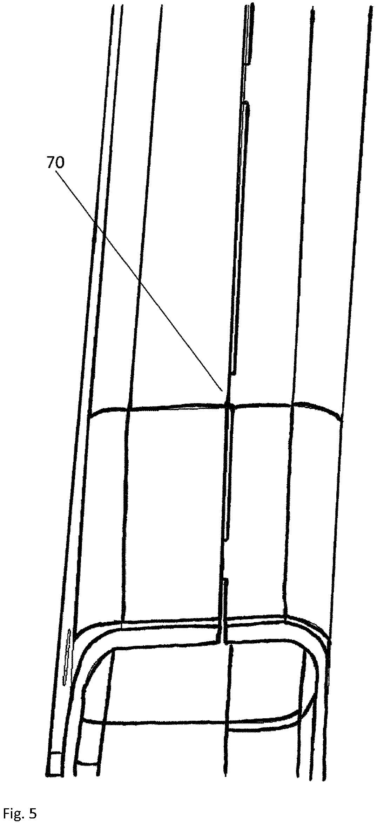

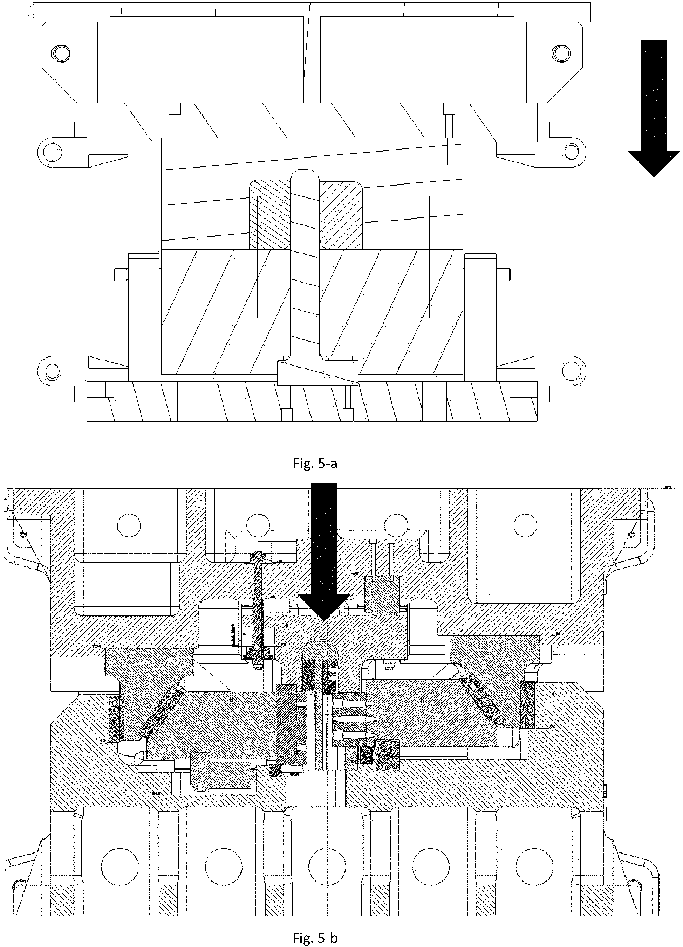

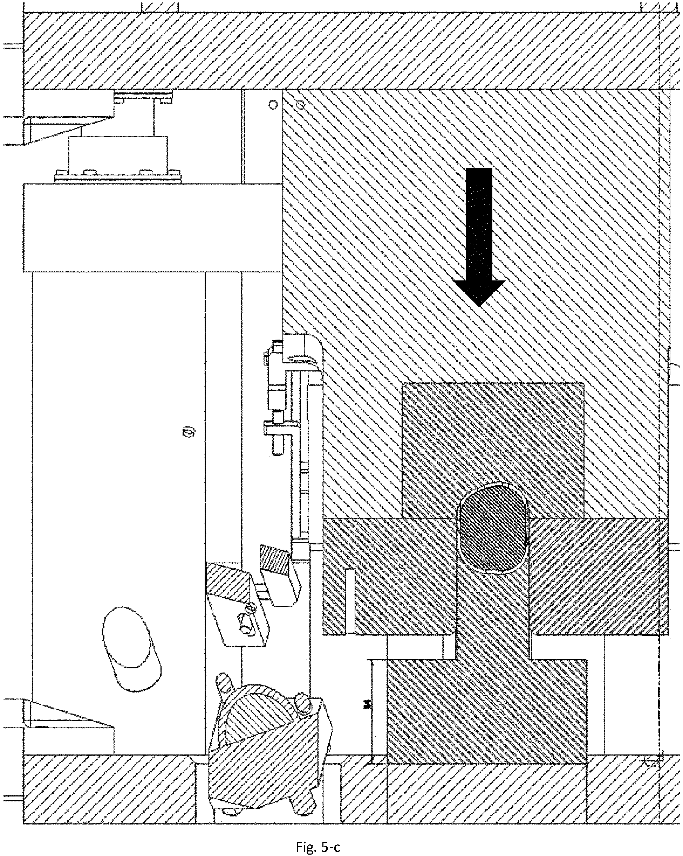

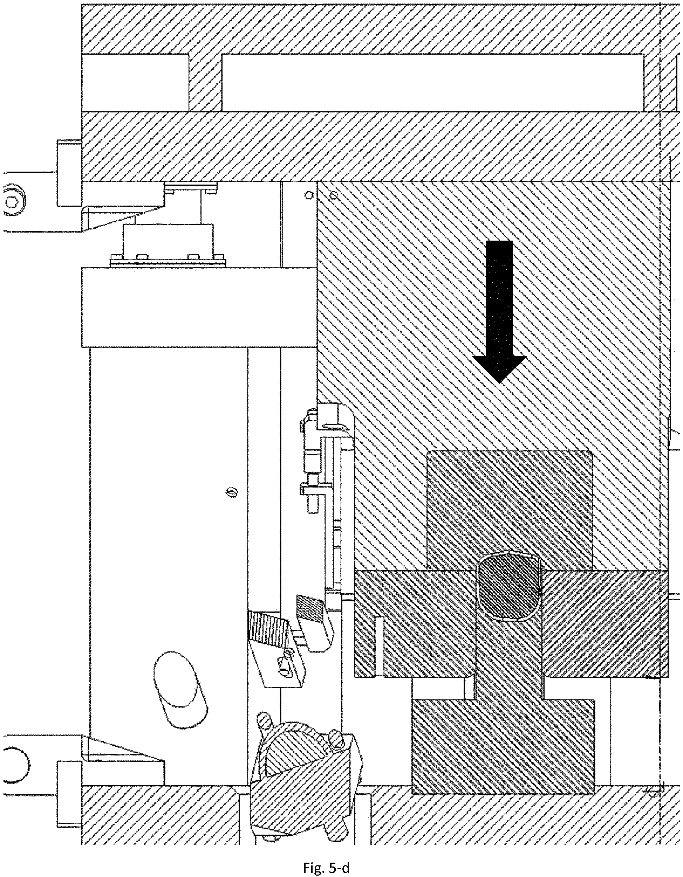

With reference to the last highlighted aspect, it is highlighted another feature of the proposed method. As shown in figure 5, in the piece trimming step there can be left, at the edge, tongues (70) useful for the next welding step. As it is known, in fact, in order to be welded the piece is retained inside a vice or a welding profile, which tends to bring the two edges close with respect to each other. In case of excessive force applied by the vice, the two edges of the piece could be brought such close to each other that they come in contact, thus obtaining a smaller distance between the two edges than the allowed one by the rules for safety welding. On the contrary, the presence of tongues (70) avoids this possibility and holds the edges at a controlled distance during the welding step.

Anyway, it is to be considered that this measure can be used only because the just described method allows to control the co-planarity of the sheet edges at the end of the bending process. In fact, if the tongues were used with the methods known at the state of the art which do not guarantee the co-planarity of the edges at the end of the bending process, at the moment of grasping the piece for the welding process, the tongue instead of functioning as stop against the opposite edge would be overlapped to the same, thus making null its own effectiveness.

It is to be précised also that, possibly, in one or both the closing steps of the sheet edges, inside the sheet there can be introduced cores configured so that the sheet is prevented from collapsing inside or breaking during the bending steps. For core realization, as known at the state of the art as well, it is used steel with thermal treatment and coating to avoid seizures in the moving step. Preferably but not limiting, there can be introduced inner cores on the whole length of the piece, undercut permitting it.

In figure 5 (a-d) there are shown section views which show the tools needed for carrying out the various just described working steps. In particular, in figures 5-a, 5-c and 5-d there are shown section views of the equipment needed for plastic deformation working, with the indication of the approaching direction of the dies. From the analysis of the figures, as just described as well, it can seen that the direction of the dies approaching is the same in all the forming steps.

## Claims

1. Method for realizing, starting from flat sheets, pieces with closed section, said section being variably shaped and dimensioned along the development of the piece, comprising the steps of:
b) subjecting a flat sheet (10) to a drawing step, thus obtaining a drawn sheet (20) with curvilinear axis, variable width along the development of the axis and rectilinear edges oriented in direction parallel to the approaching direction of the dies used for drawing;
c) trimming said edges to obtain a drawn and trimmed sheet (40) with, in each section, edges of the length needed for closing the same section;
d) closing the sheet edges to obtain a piece with closed section by means of two dies approaching according to the same approaching direction used for drawing.

2. Method according to claim 1, further comprising, before said step b), the following step of:
a) cutting a flat sheet according to a starting profile depending on the geometry of the finished piece.

3. Method according to any one of the preceding claims, further comprising, after said step d), the following step of:
e) welding said edges of the sheet.

4. Method according to any one of the preceding claims, **characterized in that** said edges closing step of point d) occurs by means of two distinct closing steps, both obtained by means of the dies approaching according to the same approaching direction used for drawing.

5. Method according to any one of the preceding claims, **characterized in that** before said closing step of point d) inside the sheet there are introduced cores configured so that the sheet is prevented from collapsing inside or breaking during said closing step.

6. Method according to any one of the preceding claims, **characterized in that** when said edges trimming step of point c) is carried out, one of the sheet edges is trimmed so that it has at least a tongue (70) configured to hold the sheet edges at a controlled distance when the piece is retained inside a vice or a welding profile.

7. Method according to any one of the preceding claims, **characterized in that** said piece is a suspension for vehicle usage.
